(19)

Europäisches
Patentamt
European
Patent Office
Office européen
des brevets

(11) **EP 1 964 887 B1**

(12) **EUROPEAN PATENT SPECIFICATION**

(45) Date of publication and mention
of the grant of the patent:
**22.09.2010 Bulletin 2010/38**

(51) Int Cl.:
*C08L 33/02* (2006.01)    *C08L 31/04* (2006.01)
*C09D 133/02* (2006.01)    *C09D 131/04* (2006.01)
*D04H 1/64* (2006.01)

(21) Application number: **08002801.2**

(22) Date of filing: **15.02.2008**

(54) **Salt-sensitive binder composition with latex processing aid**

Salzempfindliche Bindezusammensetzung mit Latex-Verarbeitungshilfsmittel

Composition de liant sensible aux sels comprenant un adjuvant de traitement en latex

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **01.03.2007 US 904333 P
14.11.2007 US 985261 P**

(43) Date of publication of application:
**03.09.2008 Bulletin 2008/36**

(73) Proprietor: **Celanese International Corporation
Dallas, TX 75234-6034 (US)**

(72) Inventors:
• **Barcomb, Christopher
Simsbury**, CT 06070 (US)

• **Farwaha, Rajeev
Belle Mead**, NJ 08502 (US)
• **Pauls Sr., Steven P.
Old Bridge**, NJ 08857 (US)
• **Walker, James L.
Whitehouse Station**, NJ 08889 (US)

(74) Representative: **Ackermann, Joachim
Postfach 11 13 26
60048 Frankfurt am Main (DE)**

(56) References cited:
**WO-A-01/83866     WO-A-2006/118745
WO-A-2006/118746     US-A1- 2007 173 594
US-B1- 6 653 406**

**Description**

Technical Field

The present invention relates generally to salt-sensitive binder compositions for nonwoven webs, where the binder includes a salt-sensitive polymer component and a latex processing aid. The latex component improves the processability of the salt-sensitive polymer, while maintaining good wet tensile strength and dispersibility properties. The binder enables nonwoven webs which have elevated tensile strength in salt solutions, and which become dispersible in the presence of tap water.

Background

The use of salt-sensitive polymers as binder compositions for nonwoven webs has been described in the prior art, and are generally used to produce flushable fibrous products which retain wet strength in the presence of a salt-composition, yet are disposable in a sewage or septic system. References relevant to salt-sensitive binder compositions may include, for example, United States Patent No. 5,972,805 to Pomplun et al., United States Patent No. 6,897,168 to Branham et al., United States Patent No. 6,433,245 to Bjorkquist et al., United States Patent Application Publication No. 2003/0220042 to Lostocco et al., as well as US 7,320,831 (WO 2006/118746) and US 7,329,705 (WO 2006/118745) both to *Farwaha et al.*

Adding a latex aid to a salt-sensitive polymer composition in order to improve its viscosity characteristics is also known in the art. United States Patent No. 6,602,955 to Soerens et al. describes an ion-sensitive binder material for nonwoven webs, where the binder material includes a salt-sensitive polymer and optionally a co-binder resin which is dispersed in the salt-sensitive polymer. According to *Soerens et al.*, the co-binder polymer desirably reduces the shear viscosity of the ion-sensitive polymer, making the combined composition sprayable. The co-binder may be a surfactant-stabilized emulsion system, which may include polymers such as ethylene-vinyl acetate, styrene-butadiene, styrene-acrylic, among others. The emulsion resins are generally free of any substantial crosslinking activity, though the presence of some crosslinking moieties appear to be contemplated. Similar co-binders may be found in United States Patent No. 6,653,406 to Soerens et al., United States Patent No. 6,908,966 to Chang et al., United States Patent No. 6,599,848 to Chen et al. (WO 01/83866), and United States Patent No. 6,835,678 to Jackson et al.

United States Patent No. 6,548,592 to Lang et al. discloses an ion sensitive resin binder for fibrous webs which may include a sulfonate anion modified acrylic acid terpolymer and a non-crosslinking EVA co-resin. Suitable sulfonate monomers include AMPS, and NaAMPS,. Additional sulfonated polymer/co-binder systems are described in United States Patent No. 6,579,570 to Lang et al., and United States Patent No. 6,713,414 to Pomplun et al.

United States Patent No. 6,960,371 to Bunyard et al. is directed to an ion-sensitive binder composition, having a cationic ion-sensitive resin and an ethylene/vinyl acetate polymer as a co-binder. Here again, the co-binder component is desirably non-crosslinking.

United States Patent Nos. 6,043,317 and 6,291,372, both to Mumick et al. relates to an ion-sensitive binder composition for fibrous substrates, where the binder includes 25 to 85 percent of a carboxylic acid ester terpolymer, from 5 to 35 percent of a divalent ion inhibitor, and from 10 to 70 percent of a hydrophilic cross-linkable polymer. The cross-linkable polymer, which may also act as the divalent ion inhibitor, may include polymers such as crosslinkable EVA.

Despite these advancements in the field of salt-sensitive polymers, there still exists a need for a cost-effective binder composition which has good processability and superior salt-sensitive characteristics.

Summary of Invention

It has been discovered in connection with the present invention that suitable processing characteristics can be provided to salt-sensitive binder compositions by including a latex processing aid, without negatively affecting the salt-sensitive strength and dispersibility characteristics of the binder. According to one aspect of the invention, there is provided an aqueous, salt-sensitive binder composition which includes a water solubilized salt-sensitive polymer that is converted from an emulsion polymer, and a latex processing aid which is effective to reduce the shear viscosity of the aqueous binder composition.

Thus, one embodiment of the present invention is an aqueous, salt-sensitive binder composition according to claim 1 comprising:

(a) water;

(b) a water-solubilized salt-sensitive polymer that is converted from an emulsion polymer by neutralization with base, wherein the water solubilized salt-sensitive polymer is present in amounts of from 60 to 95 wt. percent based on the dry weight of the binder composition; and

(c) a latex processing aid, wherein said latex processing aid includes from 0.25 to 5 parts per hundred weight monomer (pphm) of self-crosslinking monomer units, and is present in amounts of from 5 to 40 wt. percent based on the dry weight of the binder composition.

In other embodiments, the invention provides a nonwoven fabric which includes a salt-sensitive binder composition, where the binder includes a water-soluble salt-sensitive polymer component and a latex processing aid which includes self-crosslinking monomer units.

Thus a further embodiment of the present invention is a nonwoven fabric comprising:

(a) a web of fibers; and

(b) a salt-sensitive binder composition applied to the fibers, wherein said binder composition includes:

(i) a water soluble salt-sensitive polymer which includes from 5 to 80 wt. percent of a carboxylic acid monomer, and from 10 to 95 wt. percent of ethylenically unsaturated comonomer units; and

(ii) a vinyl acetate/acrylic latex processing aid which includes from 0.3 to 5 parts per hundred weight monomer (pphm) of self-crosslinking monomer units.

A further embodiment of the present invention is a method of making the binder composition in accordance with claim 11.

Further features and advantages of the present invention will become apparent from the discussion that follows.

Detailed Description

The present invention is described in detail below with reference to the various examples.

Unless otherwise indicated, terms are to be construed in accordance with their ordinary meaning. Percent, for example, refers to weight percent, unless context indicates otherwise. Following are some exemplary definitions of terms used in this specification and the appended claims.

"Parts per hundred weight monomer" or "pphm" refers to the mass of a reaction component per 100 parts mass of the major monomers in the polymer or reaction mix. For purposes of the invention, crosslinking monomers and functional monomers are not considered 'major monomers' when calculating the amount in pphm.

The phrase "water-solubilized," when used in reference to a polymer composition that is converted from an emulsion polymer, means that the emulsion polymer has been neutralized with base at least to the point where it is at least substantially water soluble such that it would be optically translucent in an aqueous medium (neutral pH) at 20 wt. %. Aqueous emulsions are typically opaque, milky-white liquids. When the emulsion polymer is neutralized, it begins to solubilize and the liquid becomes more transparent.

"Characteristic wet tensile strength" as defined herein, refers to the tensile strength of a web when it is measured consistent with the tests in the examples below-namely, testing 5,1 X 15,2 cm (2 X 6 inch) strips of fabric using a modification of the EDANA Tensile Method 20.2-89 where an Instron 5542 (or similar tensile tester) is set using 5,1 cm (2 inch) wide facing, 10,2 cm (4 inch) gage length, and operating at a 10,2 cm/min (4 inches/min) crosshead speed.

"Salt-sensitive," when used in reference to a binder composition, refers to the characteristic of a binder to provide a higher wet tensile strength to a fibrous web when the web is soaked in a concentrated salt solution, as compared to the wet tensile strength when the web is soaked in a solution with low concentrations of salt, such as tap water or deionized water. Generally, the binders employed in the present invention are dispersible in deionized water and non-dispersible in solutions containing high concentrations of ions. Although 5 % NaCl solutions are used as a reference for concentrated salt solutions in the examples, it should be understood that the binders of the present invention will typically be substantially non-dispersible in aqueous solutions having a salt content of at least 0.5 wt. percent or, perhaps, even lower.

According to the invention, an aqueous salt-sensitive binder composition is produced by combining (1) a salt-sensitive polymer composition with (2) a latex processing aid, where the components are dispersed in an aqueous medium. The components should be selected such that the presence of the latex aid does not substantially affect the tensile/dispersibility properties of the salt-sensitive polymer.

It is generally desirable to apply binder compositions to nonwoven webs as aqueous compositions because the binder may be thoroughly and conveniently applied to the web by known techniques such as spraying, and the water may be easily removed by heating or drying. A significant aspect of the invention is the ability of the latex processing aid to reduce the shear viscosity of the salt-sensitive polymer component in an aqueous solution so that the binder composition is more processable. In this regard, the salt-sensitive polymer component of the invention includes a polymer that is substantially water soluble.

Water soluble salt-sensitive polymers usually have a relatively high shear viscosity in an aqueous solution for a given solids content. Thus, it is generally necessary to dilute the aqueous solution to a solids content of 7 % or less in order to achieve viscosities that enable the composition to be sprayed onto a fibrous web. For example, when an aqueous salt-sensitive solution polymer composition is sprayed through a typical nozzle onto an air laid web at a solids level of about 10 %, the spray pattern is coarse and the binder solution does not fully penetrate the web due to excessive viscosities of the solution polymer. Poor web penetration is unacceptable because the binder does not impart adequate strength properties to the web. Application at low solids levels is not economically practical because too much water must be removed from the nonwoven sheet, requiring the papermaking process to operate at a slower speed which significantly affects costs. It is desirable to apply the binder to the web at a solids level of at least 10 percent, and preferably closer to 15 %.

Unlike water soluble polymers, latex compositions (stable emulsions) have relatively low viscosities even at high solids content. For example, latexes having a solids content of 20 % typically exhibit viscosities of less than 30 mPas (cps), and at 15 % solids exhibit viscosities of less than 20 mPas (cps), preferably from 1-15 mPas (cps). In contrast, a water-soluble salt-sensitive polymer at 20 % solids content may have a viscosity in a typical range of from 300 to 500 mPas (cps). At 15 % solids, a water soluble salt-sensitive polymer may have viscosity of 40 to 80 mPas (cps), but this is still too high for most application methods. Thus, in combination, the latex processing aid decreases the shear viscosity of the overall binder composition. The latex processing aid used in the invention is typically effective to reduce the shear viscosity of the aqueous binder composition by at least 10 percent, and preferably by at least 20 percent, as compared to a like binder composition having the same solids content but with no latex processing aid. In preferred embodiments, the aqueous binder composition of the invention has a solids content of from 5 to 30 percent, particularly from 10 to 20 percent and a viscosity (Brookfield at 22,2°C (72°F)) in the range of from 5 to 30 mPas (cps), and preferably from 10 to 25 mPas (cps).

As prepared, the binder materials of the invention are multi-phased aqueous compositions which include at least the water soluble polymer component and the latex component. The water soluble salt-sensitive resin may be present in the binder composition in amounts of from 50 to 95 wt. percent, and preferably from 70 to 90 wt. percent, based on the dry weight of the binder composition. The latex processing resin is typically included in the binder composition in amounts of from 5 to 50 percent based on the dry weight of the binder composition, with more preferred ranges being from 10 to 30 weight percent, or from 15 to 25 weight percent. It is believed that the latex aid, being the minor component, is generally dispersed in the salt-sensitive polymer as discrete domains when the binder composition coalesces. In this manner, the binder composition of the invention remains salt-sensitive even though the latex processing aid is typically not salt-sensitive.

The latex processing aid and the water soluble salt-sensitive resin are combined, and the solids content of the binder composition is controlled to be in the range of from 5 to 30 percent, preferably from 10 to 25 percent. In addition to improving the shear viscosity of the aqueous binder composition, the combination has additional economic advantages because the latex aid acts as a filler, somewhat diluting the more expensive salt-sensitive component, without sacrificing performance.

The salt-sensitive polymer component may include any substantially water soluble, salt-sensitive resin. Most preferably, the salt-sensitive polymer composition includes the emulsion-polymerized, water-solubilized resins described in copending application US 2007-0173594 A1 . Specific reference is made in that application to the portion between paragraph [0052] through paragraph [0083]. The polymers are made by preparing an emulsion composition by emulsion polymerizing in an aqueous medium a copolymer resin which has from 5 to 90 wt. percent of carboxylic acid monomer units, and from 10 to 95 wt. percent of ethylenically unsaturated monomer units; converting the emulsion composition into a solution by neutralizing the resin with base until it is water soluble; and controlling the viscosity of the solution to be less than 2,000 mPas (cps) at 23°C. The process may also include the step of diluting the emulsion composition to a solids level of from 10 to 35 percent prior to neutralization, and preferably to a level of from 15 to 25 percent. Desirably, the viscosity of the solution should be controlled to be less than 1,000mPas (cps), and more preferably less than 500 mPas (cps), or less than 200 mPas (cps). The application US 2009-0123773 A1 ("Salt Sensitive Binders Containing Vinyl Acetate for Nonwoven Webs and Method of Making Same") discloses that binder solutions having salt-sensitive polymeric resins can be prepared by emulsion polymerizing a copolymer, including vinyl acetate and/or vinyl acetate / ethylene and then neutralizing the emulsion composition to produce a water soluble polymer. Especially preferred are polymers including vinyl acetate (VA), ethylene, acrylic acid (AA), methacrylic acid (MAA) and alkyl acrylates.

As described in the above identified copending applications, the salt-sensitive polymer is a water-solubilized resin that is converted from an emulsion polymer. Briefly, a carboxylic acid monomer is emulsion polymerized with one or more ethylenically unsaturated comonomers in an aqueous medium in the presence of an emulsifying agent. The emulsifying agents form into a plurality of nanometer sized micelles in which the polymerization occurs. The emulsion polymer product is stable in the aqueous medium and has polymer particles ranging from 25 nm to 300 nm.

The carboxylic acid monomer in the salt-sensitive emulsion polymer may include $C_3$-$C_8$ carboxylic acids such as methacrylic acid, acrylic acid, maleic acid, monoesters of maleic acid, crotonic acid, and itaconic acid, to mention a few. The ethylenically unsaturated monomer units may comprise (meth)acrylates, maleates, (meth)acrylamides, itaconates, vinyl esters including vinyl acetate, vinyl acetate-ethylene, styrenics, acrylonitrile, nitrogen functional monomers, alcohol functional monomers, and unsaturated hydrocarbons. For additional suitable monomer units, specific reference is made to the copending application US 2007-0173594 A1 at page 13, line 23 through page 17, line 23 (paragraph [0053] through paragraph [0062].) Such monomers may include hydrophobic monomers in amounts such that the salt-sensitive copolymer includes from 2 to 55 wt. percent of hydrophobic monomer units. The presence of a hydrophobic monomer may improve the triggering properties of the binder, particularly in applications where hard water dispersibility is desired. The hydrophobic monomer is selected from alkyl (meth)acrylamides having from 2 to 15 carbon atoms in the alkyl moiety, straight chained or branched alkyl methacrylates having from 4 to 12 carbon atoms in the alkyl moiety, straight chained or branched alkyl acrylates having from 5 to 12 carbon atoms in the alkyl moiety, a substituted or unsubstituted cycloalkyl (meth)acrylate, and combinations thereof.

The monomer components are emulsion polymerized to produce a stable emulsion which is then neutralized by the addition of base until the polymer is dissolved in the aqueous medium. The neutralized polymers described in the copending application US 2007-0173594 A1 exhibit excellent salt-sensitive behavior, such that they impart elevated tensile strength properties to a nonwoven web in the presence of salt, but remain dispersible in the presence of deionized water or household water. While the emulsion polymerized, water-solubilized resins described in the application US 2007-0173594 A1 are preferred, it should be understood that other water-soluble salt-sensitive polymers may be suitable in some embodiments of the invention.

Due to the generally non-viscous nature of emulsion resins, the choice of emulsion polymer used for the latex processing aid is not particularly limited and may include homopolymers or copolymers including vinyl acetate/ethylene copolymers, vinyl acetate/acrylic copolymers, homopolymers of vinyl acetate, homopolymers of acrylics, styrene/butadiene copolymers or any combination thereof. Thus, a preferred latex processing aid includes a polymer selected from the group consisting of vinyl acetate polymers, acrylic polymers, vinyl ester/ethylene copolymers, vinyl ester/acrylic copolymers, styrene/butadiene copolymers and combinations thereof. The emulsion resin may also include functional monomers such as carboxylic acid functional monomers and hydroxyl functional monomers. Desirably, the latex polymer components are selected to be hydrophilic because this improves the wetting of the fibrous substrate. Vinyl acetate-acrylic latexes are particularly preferred for use in the inventive binder compositions, where the vinyl-acrylic latex generally includes from 30-70 wt. percent of vinyl acetate monomer and from 30-70 wt. percent of acrylate monomers such as $C_1$-$C_8$ alkyl (meth) acrylates. More preferably, the vinyl acrylic latex includes from 50 to 70 wt. percent of vinyl acetate monomer and from 30-50 weight percent of acrylate monomers.

The latex polymer is stabilized in an aqueous medium with emulsifiers, surfactants, and/or protective colloids as is known in the art. The surfactants used in connection with the processing aid may be either anionic, non-ionic, or cationic surfactants. Preferably the latex is surfactant stabilized in order to provide adequate sheer protection through a nozzle tip, which aids in atomization when sprayed onto an airlaid web. A surfactant stabilized latex aid also lowers the surface tension of the binder composition so that, when applied to a nonwoven web, the web is easily wetted. Additionally, surfactant-stabilized latexes generally promote smaller particle emulsions which further improves sprayability and web penetration. Nonionic and/or anionic surfactants are preferred. The surfactants may also include polymerizable surfactants.

Examples of suitable protective colloids which may be used are polyvinyl alcohols, starch and cellulose derivatives, and vinylpyrrolidone copolymers. Protective colloids may be used alone or in conjunction with other emulsifying agents. In some embodiments of the invention, however, the latex aid is substantially free of protective colloids, *i.e.,* less than 0.5 pphm.

The latex processing aid may be crosslinking or noncrosslinking. In preferred embodiments of the present invention, the latex includes at least some crosslinking activity by incorporating crosslinking monomers. Self-crosslinking monomers (sometimes called post-crosslinking monomers) may include those containing methylol groups. N-methylol acrylamide (NMA) is a particularly preferred crosslinking monomer for use in the invention. So also, acrylamide/N-alkylol acrylamide mixtures may be employed, if so desired. *See*, in this regard, copending application US 2009-0036574 entitled "Self-Crosslinking Dispersions Utilizing Acrylamide/N-Alkylolacrylamide Crosslinking Mixture with $C_2$-$C_{10}$ Alkylol". Pre-crosslinking monomers (also called *in situ* crosslinkers) may also be suitable. Pre-crosslinking monomers are generally effective to crosslink the resin during polymerization; these monomers generally include at least two vinyl functional groups. Diallyl phthalate is a suitable pre-crosslinking monomer that may be used in the latex processing aid. When crosslinking monomers are used, they should be present in amounts of from 0.25 to 5 pphm, 0.3 to 5 pphm, 0.5-4 pphm, and preferably from 1 to 3 pphm.

Whether crosslinking or not, the latex processing aid used in the inventive binder composition should be selected and provided in amounts so that it does not substantially interfere with the tensile/dispersibility properties of the salt-sensitive polymer. It is noted that the dispersibility/tensile properties of a given fabric will be affected by the web structure (basis weight, embossing, caliper, for example) and add-on. However, for a like web (structure and add-on), the inventive binder composition generally maintains the tensile strength of the web in a 5 % solution of NaCl to within 20 percent the value exhibited by a like binder composition which has no processing aid, and more preferably to within 10 percent the tensile values exhibited by a like binder composition having no latex aid. Likewise, the use of the latex aid should not significantly affect the tensile strength in hard water (50-200 ppm divalent cations) or soft tap water (< 15 ppm divalent cations). The latex-containing binder composition should exhibit tensile values in hard water or tap water that are within 20 percent, preferably 10 percent, and most preferably within 5 percent of the value exhibited by a like binder composition having no latex aid, when measured on a like fabric.

It has also surprisingly been found that when crosslinking monomers are included in the latex aid, the binder compositions still exhibit dispersibility characteristics in hard water and tap water which are comparable to the above-noted results, *i.e.*, within 5 percent the values of the salt-sensitive polymer alone. Moreover, the crosslinking agent significantly improves the in-use tensile strength of a web that is soaked in a salt solution. In some cases the crosslinked latex aid improves the tensile strength in 5 % NaCl by at least 10 percent, and preferably at least 25 percent, of the values exhibited by a like binder composition having no latex processing aid, when measured on a like fabric. In some instances, the crosslinking monomer can elevate the salt strength of the web by amounts of from 50 to 85 percent. The invention is unique in this respect, and it is surprising that the crosslinking activity is effective to elevate in-use (salt) strength, yet have essentially no negative effect on the hard water or tap water dispersibility.

The latex processing aid may be selected to have a glass transition temperature of from -50°C to 10°C, and preferably from -25°C to -10°C. The latex resin preferably has a lower Tg because the salt-sensitive solubilized resin used in the invention generally has a Tg of at least 40°C which tends to produce a fairly stiff, brittle product with little elongation. The use of a low Tg latex resin as the processing aid serves to impart some elongation, making the composition less brittle and improving the hand feel of the product.

In addition to the above advantages, the composition of the binder (including latex) can be manipulated and the degree of neutralization of the salt-sensitive polymer can be selected such that the pH of the overall binder composition can be controlled. Generally, the aqueous binder composition has a pH in the range of from 5.0 to 9.0, and more preferably from 6.0 to 8.0. The ability to control the pH allows for better shear stability which results in more consistent spraying characteristics (for circumstances where the binder is applied to a nonwoven web by spraying). The pH of the latex aid may likewise be controlled which enables one to influence the degree of crosslinking activity, where a latex having self-crosslinking monomers is used. The latex aid may advantageously be provided at a high solids content of from 40 to 60 percent, which is preferred for economic reasons.

Various adjuvants may also be incorporated into the binder composition as dictated by the nature of the desired composition as well known by those of ordinary skill in the art. Examples of additives traditionally used include plasticizers, surfactants, tackifiers, thickeners, fillers, humectants, fragrances, pigments, titanium dioxide or other opacifiers, colorants, antifoams, bactericides, bacteriostats, and encapsulated components which may be employed in conventional amounts.

As noted above, the salt-sensitive binder compositions of the invention are useful as binders for fibrous nonwoven webs. The nonwoven structures useful in the present invention may be formed by any process known in the art, such as, but not limited to, airlaid, wetlaid, drylaid, or carded fiber. The fiber web typically has a basis weight of from 20 - 200 grams per square meter (gsm). The fibers in the nonwoven material may be oriented isotropically, or be aligned with respect to a processing direction. Thicker nonwovens may additionally have fiber oriented in the z-direction of the article, *i.e.* perpendicular to the fabric plane. In addition to the binder composition, the fibers in the nonwoven materials may be interlocked mechanically to provide strength and cohesion.

In the manufacture of nonwoven webs, the fibers are typically dispersed in a medium (air for air-laid and liquid for wet-laid) and deposited in sheet form on a support base. In air-laid processes, the fibers and other optional materials are typically suspended in air within a forming system and deposited as a sheet-like structure onto a moving forming screen or a rotating cylinder, prior to application of the binder. Wet-laid processes include providing an aqueous slurry and drying the slurry to form the web.

Fibers from any source and of any suitable length may be used in the present invention. Fibers include those known in the art including cellulosic fibers from woody plants such as deciduous and coniferous trees; non-woody plants, such as cotton, flax, esparto grass, milkweed, straw, jute and bagasse; and synthetic fibers, such as those derived from polyester, polypropylene, polyethylene, polyamides, polyacrylics, and rayon. Other fiber materials used in the art, and mixtures of any fibers, can be used in the present invention. Preferred fibers are those typically used in nonwovens, especially wood pulp fibers having a length of less than 0.5 cm such as kraft fibers. For wet-laid webs, the fibers should generally be less than a maximum of 5 cm long and most preferably less than 2 cm long. For air-laid webs, the fibers should be less than 8 mm long, preferably less than 6 mm long. Such fibers provide good biodegradable breakdown and dispersion characteristics.

Generally, the fiber web is formed or at least partially formed prior to application of binder. The aqueous binder composition is combined with the fibers by contacting the fibers with the composition by means known in the art such as, printing, spraying with or without air, saturation, creping, and foam-application. The polymer may be combined with the fibers in the wet-end of the papermaking process (e.g., by addition to the paper furnish) or, preferably, after the paper product is substantially formed (e.g., via dry end addition). Most preferably, the binder composition of the invention is sprayed onto an airlaid web. The use of the latex processing aid enables the binder composition to be sprayed on the nonwoven web at a solids content of 8 to 18 percent, and still have improved spray atomization and better distribution through the x, y, and z, directions of the nonwoven web.

After application, the fibrous web is typically subjected to a drying step to remove water and/or other liquid. Drying may be accomplished by subjecting the paper product to elevated temperatures, e.g., in the range of from 85°C to 125°C for a time sufficient to achieve the desired level of dryness, typically to constant weight.

The amount of binder composition that remains on the fibers after drying is referred to as "add-on." The percent add-on can be calculated as follows:

$$\text{Add - on \%} = \frac{\text{Combined binder/fiber wt.} - \text{Fiber wt.}}{\text{Combined binder/fiber wt.}} \times 100\%$$

The fiber weight is the weight of the fibers before any binder composition is applied. The fiber/binder weight is the weight of the dried (dry to the touch) product. The fibrous webs will generally have an add-on value of from 2 to 50 percent by weight, preferably from 10 to 30 percent by weight. The fiber component is generally present in the final web in amounts of from 50 to 98 percent by weight, depending on the end use of the disposable article. For many uses, fibers make up 70 to 85 percent by weight of web.

As noted above, the binder composition of the invention has temporary wet strength in the presence of salt, yet disperses in water. Thus, for applications where the product is intended to be used in a moist state, a salt component should be added to the fibrous web. Depending on the application, it may be desirable to apply the salt to the fibrous web during production. In such cases, the salt may be applied to the article during manufacture by conventional means such a spraying, coating, and dipping. Generally, the water-solubilized binder composition and the salt should not be mixed together before they are added to the fibers. The reason for this is that the salt has a tendency to precipitate the polymer if the two are combined prior to addition to the fibers. Thus, the disposable article that is being treated with the polymer binder is preferably subjected to the drying step to remove water and/or any other liquid prior to the addition of salt. Upon drying, the salt component can be added to the fiber/binder substrate to develop the in-use strength. The salt is typically applied to the web as a solution or lotion containing at least 0.5 wt. percent salt to ensure the web maintains its temporary wet strength. Additionally, it is preferred to employ salts with monovalent cations such as sodium or potassium salts, as opposed to salts having multivalent cations which may affect the water-dispersibility of the binder. Sodium chloride and sodium sulfate are preferred salts to use in the wetting composition.

In addition to salt components, pre-moistened products may include additional additives in the wetting composition, which include, preservatives, boric acid, bicarbonates, moisturizers, emollients, surfactants, humectants, alcohols, water, and fragrances. The wetting composition may be present in amounts of up to 500 percent or more by weight based on the weight of the nonwoven material, and preferably from 200-400 percent. The wetting composition is generally added as a secondary treatment of the nonwoven web. This wet solution treatment can occur just prior to packaging, or after the nonwoven has been placed in the final container.

Prepared in this manner, wet-use products will have a stable wet strength of measurable tensile value and integrity, yet disperse when placed in tap water. This allows the product to be flushed in sewer or septic systems without causing blockage problems. The fiber typically begins dispersing immediately in water. The rate of dispersion can be tailored for different applications by varying factors such as the composition of the polymer, the molecular weight, the degree of neutralization, the pH of the solution, or the type of fiber web.

Pre-moistened articles include those such as wet wipes, household wipes, pre-moistened baby wipes, pre-moistened toilet tissue, and pre-moistened household wipes. The inventive binder solutions may also be suitable for other disposable applications which employ salt sensitive binders such as diapers, incontinent garments and feminine care products.

Among the various advantages of the invention, there is specifically enumerated:

a) the aqueous binder composition has a low shear viscosity;

b) the latex aid acts as a filler for the more expensive salt-sensitive polymer, without negatively affecting dispersibility/tensile properties;

c) the latex aid improves the elongation of the fabric, reduces brittleness, and improves hand feel;

d) in some embodiments, the in-use salt tensile strength is substantially improved without affecting dispersibility in tap water; and

e) the binder composition is more cost-effective overall than using the water-soluble salt-sensitive polymer alone.

The following examples are presented to further illustrate and explain the present invention and should not be taken as limiting in any regard.

EXAMPLES

The following compositional abbreviations are used in the examples:

| | |
|---|---|
| AA | Acrylic Acid monomer |
| BA | Butyl Acrylate monomer |
| DAP | Diallyl Phthalate monomer |
| E | Ethylene |
| ibMA | Isobornyl Methacrylate monomer |
| MAA | Methacrylic Acid monomer |
| MMA | Methyl Methacrylate monomer |
| NaOH | Sodium Hydroxide (neutralizing base) |
| NMA | N-Methylol Acrylamide monomer |
| VA | Vinyl Acetate monomer |
| VAE | Vinyl Acetate-Ethylene resin |

Exemplary binder solutions were prepared by emulsion polymerizing the monomers to obtain a latex composition having 30-55% solids. The emulsion polymerization procedure which was used to polymerize the salt-sensitive polymers is described generally in copending application US 2007-0173594 A1 at pp. 32-33 (paragraph [0091] to [0097].) where the monomer composition is slightly different. The salt-sensitive solution polymers in the examples have the compositions outlined in Table 1, below.

After polymerization, the above salt-sensitive emulsion polymers were diluted to a solids content of 20 %. The water-solubilized polymer composition is then prepared at room temperature by neutralizing the emulsion polymer according to the following procedure: the emulsion composition is agitated and an aqueous solution of 15% solids sodium hydroxide is added until the desired degree of neutralization is achieved. Unless context indicates otherwise, the compositions of the examples below were neutralized at least to the point where they become translucent.

The water soluble polymers (WSP) were then combined with a latex processing aid emulsion (PAE) having a composition illustrated in Table 2. Where functional monomers (AA) or crosslinking monomers (DPA, NMA) are indicated, they are present in the latex in amounts of from 0.25 or 0.3-2 pphm.

Table 1- Water Soluble Polymer, pphm

| Example | BA | MAA | ibMA | MMA |
|---|---|---|---|---|
| WSP-1 | 55 | 40 | 0 | 5 |
| WSP-2 | 55 | 40 | 0 | 5 |
| WSP-3 | 57.5 | 40 | 7.5 | 0 |
| WSP-4 | 55 | 40 | 0 | 5 |

Table 2- Latex Processing Aid, pphm

| Example | VA | BA | E | AA | DAP | NMA |
|---|---|---|---|---|---|---|
| PAE-1 | 71 | | 27 | | | 2 |
| PAE-2 | 60 | 40 | | 1.2 | | |

(continued)

| Example | VA | BA | E | AA | DAP | NMA |
|---------|-----|-----|---|----|-----|-----|
| PAE-3 | 60 | 40 | | | 0.3 | |
| PAE-4 | 60 | 40 | | | | 2 |

The binder formulations with both the water soluble polymer and latex aid, are then diluted or reduced to the reported solids level and tested for viscosity and tensile properties. The water soluble polymers are also tested alone for comparative purposes. The viscosity measurement is Brookfield RVF viscosity measured at 20 rpm and 22,2°C (72°F).

Table 3-Effect of Latex Aid on Viscosity

| Example | WSP | WSP Level (%) | PAE | PAE Level (%) | Solids (%) | Viscosity (mPas (cps)) |
|---------|-------|-----|-------|----|----|----|
| 1 | WSP-4 | 100 | none | 0 | 18 | 49 |
| 2 | WSP-4 | 80 | PAE-4 | 20 | 18 | 28 |
| 3 | WSP-4 | 80 | PAE-3 | 20 | 18 | 27 |
| | | | | | | |
| 4 | WSP-4 | 100 | none | 0 | 15 | 28 |
| 5 | WSP-4 | 80 | PAE-4 | 20 | 15 | 21 |
| 6 | WSP-4 | 80 | PAE-3 | 20 | 15 | 19 |
| | | | | | | |
| 7 | WSP-4 | 100 | none | 0 | 12 | 19 |
| 8 | WSP-4 | 80 | PAE-4 | 20 | 12 | 16 |
| 9 | WSP-4 | 80 | PAE-3 | 20 | 12 | 13 |

The above data indicates that various latex processing aids are effective to lower the shear viscosity of the binder composition at all solids levels measured. Note, for instance, that the viscosity of 100 % water-soluble polymer at 15 % solids, is similar to the viscosity of the 80:20 blend at 18 % solids.

Additional viscosity measurements were performed in Table 4 below, using varying amounts of latex processing aid.

Table 4-Effect of Latex Aid on Viscosity

| Example | WSP | WSP Level (%) | PAE | PAE Level (%) | Solids (%) | Viscosity (mPas (cps)) |
|---------|-------|-----|-------|----|----|----|
| 10 | WSP-4 | 100 | none | 0 | 15 | 28 |
| 11 | WSP-4 | 90 | PAE-4 | 10 | 15 | 23 |
| 12 | WSP-4 | 80 | PAE-4 | 20 | 15 | 21 |
| 13 | WSP-4 | 70 | PAE-4 | 30 | 15 | 17 |
| | | | | | | |
| 14 | WSP-4 | 100 | none | 0 | 15 | 28 |
| 15 | WSP-4 | 90 | PAE-3 | 10 | 15 | 21 |
| 16 | WSP-4 | 80 | PAE-3 | 20 | 15 | 19 |
| 17 | WSP-4 | 70 | PAE-3 | 30 | 15 | 18 |

9

The above data illustrates that the ratio of processing aid to salt-sensitive polymer can be adjusted to reduce the viscosity of the aqueous composition to various levels. The data suggests that higher ratios of processing aid can result in continued improvements in processability.

The binder compositions of the invention were next tested for tensile and dispersibility properties after being applied to fabrics made from airlaid trials. Preparation of the bonded airlaid fabric is summarized briefly as follows: The airlaid pulp is prepared using commercial airlaid practices whereby the polymer system is spray applied on one side of the airlaid pulp, and the pulp is dried in through-air ovens. The polymer is then spray applied to the opposite side of the airlaid pulp, again dried in through-air ovens, and then rolled up. The airlaid webs in the examples were produced on the M & J airlaid pilot line based in Horsens, Denmark. The examples below have binder add-on values ranging from 23 % to 28 %.

The basic structures of the airlaid fabrics are listed at the bottom of each table, and include any reference to embossing of the fabric (prior to binder application), target basis weight (gram/m$^2$), binder add-on (%), and caliper (mm).

All fabrics were prepared using the method noted below. All salt lotions contained low levels ($\leq 0.2\%$) of either nonionic or nonionic/anionic surfactants to promote wetting of the fabrics.

Preparation of fabric with the salt lotion:

1. The fabrics have the salt lotion applied at 200-400 XOW (time-own-weight). XOW is calculated by weighing the untreated fabric, and then adding 200-400% (the weight of the untreated fabric with) salt lotion. This XOW level is typical of wet wipes.

2. The lotion is applied to the fabric via a nip roll or hand roller process to ensure full wetting, and allowed to equilibrate for five minutes (minimum).

3. After equilibration, the fabrics are tested for one or more of the following:

a. Tensile strength (salt lotion).
b. Hard water tensile strength by soaking each strip in 100ml of hard water for 60 minutes.
c. Tested for dispersibility via tip-tube method.

Tensile testing was done using 5,1 X 15,2 cm (2x6 inch) tensile strips cut in the cross-machine direction of the fabric. The tensile measurement device utilized five- centimeter (two-inch) wide facings, a ten-centimeter (four-inch) gage length, and operated at a ten centimetre/minute (four inches/minute) crosshead speed. This test is a modification of the EDANA Tensile Method 20.2-89. The tensile values, as measured, are in mN/five-centimetre (gram-force/two-inch), and are then reported in mN/2.5cm (gram-force/inch) in the tables below.

As noted above, for hard water testing, the tensile strips are soaked in 100 ml of hard water for 60 minutes to ensure that full wetting of the strips occurs. Upon removal from the soak solution, the tensile strip is placed onto absorbent paper toweling to remove excess solution and then immediately tested for tensile strength. The tensile data is outlined in Tables 5-9 below.

Table 5 - Impact of Self-Crosslinking VAE Latex Aid on Tensile Strength

| Example | WSP | WSP Level (%) | PAE | PAE Level (%) | Spray Solids (%) | 5% Sodium Chloride | 200 ppm Hard Water |
|---------|------|------|------|------|------|------|------|
| 1 | WSP-1 | 100 | none | - | 8 | 981 (254) | 355 (92) |
| 2 | WSP-1 | 80 | PAE-1 | 20 | 8 | 769 (199) | 436 (113) |
| 3 | WSP-2 | 100 | PAE-1 | 0 | 8 | 1108 (287) | 780 (202) |
| 4 | WSP-2 | 80 | PAE-1 | 20 | 8 | 950 (246) | 772 (200) |
| Airlaid web structure was non-embossed 100% pulp at 62 gsm/23% add-on/0.7 mm caliper. | | | | | | | |

The data in Table 5 illustrates that the use of a self-crosslinking vinyl acetate/ethylene (VAE) latex processing aid in amounts of 20 %, does not significantly affect either the salt tensile strength or the tensile strength in (very) hard water.

In Table 6 below, the same binder composition as in example 4 was used to determine the effect of the latex aid on tensile strength values when various web structures are used.

Table 6- Impact of Self-Crosslinking VAE Latex Aid Using Various Web Structures

| Example | WSP | WSP Level (%) | PAE | PAE Level (%) | Spray Solids (%) | 5% Sodium Chloride | 50 ppm Hard Water |
|---|---|---|---|---|---|---|---|
| 5 | WSP-2 | 100 | none | - | 8 | 915 (237) | 81 (21) |
| 6 | WSP-2 | 80 | PAE-1 | 20 | 8 | 1074(278) | 170 (**44**) |
| 7 | WSP-2 | 100 | none | - | 8 | 1313 (340) | 0 (0) |
| 8 | WSP-2 | 80 | PAE-1 | 20 | 8 | 1417 (367) | 0 (0) |
| 9 | WSP-2 | 100 | none | - | 8 | 1800 (466) | 0 (0) |
| 10 | WSP-2 | 80 | PAE-1 | 20 | 8 | 1711 (443) | 139 (36) |
| 11 | WSP-2 | 100 | none | - | 8 | 981 (254) | 0 (0) |
| 12 | WSP-2 | 80 | PAE-1 | 20 | 8 | 1004 (260) | 0 (0) |

Airlaid web structures were:
5 and 6: non-embossed 100% pulp at 62 gsm/23% add-on/0.7 mm caliper
7 and 8: non-embossed 100% pulp at 62 gsm/27% add-on/0.7 mm caliper
9 and 10: non-embossed 100% pulp at 69 gsm/27% add-on/0.7 mm caliper
11 and 12: non-embossed 100% pulp at 55 gsm/27% add-on/0.7 mm caliper

The above data illustrates that while the web structure and add-on values may impact the tensile data of the web, the use of the self-crosslinking VAE latex aid does not substantially impact the salt or very hard water tensile strength when compared to like fabrics (structure and add-on). Accordingly, it is apparent from Tables 5 and 6, that binder compositions can be provided which have comparable salt-sensitivity to the water soluble resins, yet also provide improved processability and have lower cost.

Additional latex aids are considered in the examples which follow.

Table 7- Impact of Non-Crosslinking Vinyl Acrylic Latex Aid on Tensile Strength

| Example | WSP | WSP Level (%) | PAE | PAE Level (%) | Spray Solids (%) | 8% Sodium Sulfate | 50 ppm Hard Water |
|---|---|---|---|---|---|---|---|
| 13 | WSP-3 | 100 | none | - | 8 | 1502 (389) | 0 (0) |
| 14 | WSP-3 | 90 | PAE-2 | 10 | 8 | 819 (212) | 0 (0) |
| 15 | WSP-3 | 80 | PAE-2 | 20 | 8 | 722 (187) | 0 (0) |

Airlaid web structure was non-embossed 100% pulp at 69 gsm/28% add-on/0.5 mm caliper.

Interestingly, the data in Table 7 shows that the non-crosslinking vinyl acrylic processing aid appears to negatively impact the salt tensile strength, resulting in tensile values that are more than 40 % lower, but the hard water tensile strength is not adversely effected.

Table 8- Impact of Crosslinking Vinyl Acrylic Latex Aid on Tensile Strength

| Example | WSP | WSP Level (%) | PAE | PAE Level (%) | Spray Solids (%) | 5% Sodium Chloride | 50 ppm Hard Water |
|---|---|---|---|---|---|---|---|
| 16 | WSP-4 | 100 | none | - | 12 | 1147 (297) | 0 (0) |
| 17 | WSP-4 | 80 | PAE-3 | 20 | 15 | 1143 (296) | 0 (0) |

(continued)

| Example | WSP | WSP Level (%) | PAE | PAE Level (%) | Spray Solids (%) | 5% Sodium Chloride | 50 ppm Hard Water |
|---------|-----|--------------|-----|--------------|------------------|--------------------|-------------------|
| 18 | WSP-4 | 80 | PAE-4 | 20 | 15 | 1518 (393) | 0 (0) |
| Airlaid web structure was embossed 100% pulp at 62 gsm/25% add-on/0.7 mm caliper. | | | | | | | |

The data in Table 8 unexpectedly shows that while the pre-crosslinked (PAE-3) latex does not significantly affect either the salt strength or the hard water strength, the post-crosslinked latex (PAE-4) shows substantially improved salt-strength while maintaining good dispersibility in hard water. It was observed in the examples above, that the binder compositions which included a latex processing aid exhibited much better spraying characteristics, even at 15 % solids, than the binder composition which did not include a latex aid at 12 % solids. The improvements in strength may be attributed, in part, to the improved spray atomization and distribution of the polymer through the airlaid sheet. Additionally, it is quite surprising that the post-crosslinking monomers in the latex can significantly enhance the strength of the fabric in the presence of the salt solution, yet have no measureable effect on the tensile strength in hard water. In any event, the result is highly desirable for producing webs with strong in-use wet strengths which are readily dispersible.

The effect of the self-crosslinking vinyl acetate-acrylic latex was further measured in the following examples.

Table 9- Impact of Crosslinking Vinyl Acrylic Latex Aid on Tensile Strength

| Example | WSP | WSP Level (%) | PAE | PAE Level (%) | Spray Solids (%) | 5% Sodium Chloride | 50 ppm Hard Water |
|---------|-----|--------------|-----|--------------|------------------|--------------------|-------------------|
| 1 | WSP-4 | 100 | none | - | 12 | 950 (246) | 0 (0) |
| 2 | WSP-4 | 90 | PAE-4 | 10 | 15 | 1715 (444) | 0 (0) |
| 3 | WSP-4 | 80 | PAE-4 | 20 | 15 | 1398 (362) | 0 (0) |
| Airlaid web structure was embossed 100% pulp at 62 gsm/25% add-on/0.7 mm caliper. | | | | | | | |

Here also, the data shows that increasing the level of the self-crosslinked processing aid had a positive impact upon salt tensile strength, and no significant impact upon hard water tensile strength.

The binder compositions were next measured for dispersibility characteristics by the tip-tube testing method. Tip-tube testing places a 10,2 X 10,2 cm (4x4 inch) specimen of the fabrics treated with 5 % sodium chloride into a eight-centimetre (three-inch) diameter and 51 cm (20 inch) long tube containing 700 ml of (hard) water. The tube is capped and then rotated back-and-forth (one-cycle over 4 seconds). Dispersibility is achieved when the fabric breaks into two or more samples. The maximum run time is 480 cycles, or 32 minutes. Additional reference can be found via the INDA Flushability Committee February 13, 2006 documents.

Table 10-Dispersibility using Tip-Tube Testing

| Example | WSP | WSP Level (%) | PAE | PAE Level (%) | 50 ppm Hard Water Dispersibility (min:sec) | Tap Water Dispersibility (min:sec) |
|---------|-----|--------------|-----|--------------|---------------------------------------------|-------------------------------------|
| 1 | WSP-4 | 100 | none | - | 1:50 | 0:14 |
| 2 | WSP-4 | 90 | PAE-4 | 10 | 4:47 | 0:14 |
| 3 | WSP-4 | 80 | PAE-4 | 20 | 10:56 | 3:05 |
| Airlaid web structure was embossed 100% pulp at 62 gsm/25% add-on/0.7 mm caliper | | | | | | |

Here, the data shows that using substantial amounts of the processing aid somewhat prolongs the time to dispersion. However, while it may take longer to disperse, it ultimately does not affect the dispersibility because the fabric still eventually breaks up in both hard water and tap water.

Additional Embodiments

One preferred emulsion composition for use as a processing aid has the following components in the amounts indicated: 58 pphm vinyl acetate, 40 pphm butyl acrylate, 2 pphm N-methylol acrylamide (NMA), and stabilized with anionic and nonionic surfactants. Also suitable as processing aids are vinyl acetate-ethylene based emulsions of the class described in United States Patent No. 7,056,847 to *Walker et al..* The amount of crosslinker used in connection with these compositions is generally from 0.25 pphm to 5 pphm, suitably from 0.5 pphm to 4 pphm and typically from 1-3 pphm. Up to 40 wt.% ethylene, based on the weight of polymer may be incorporated into these resins. Another preferred latex processing aid is 71 pphm VA, 27 pphm ethylene and 2 pphm NMA.

**Claims**

1.  An aqueous, salt-sensitive binder composition comprising:

    (a) water;
    (b) a water-solubilized salt-sensitive polymer that is converted from an emulsion polymer by neutralization with base, wherein the water solubilized salt-sensitive polymer is present in amounts of from 60 to 95 wt. percent based on the dry weight of the binder composition; and
    (c) a latex processing aid, wherein said latex processing aid includes from 0.25 to 5 parts per hundred weight monomer (pphm) of self-crosslinking monomer units, and is present in amounts of from 5 to 40 wt. percent based on the dry weight of the binder composition.

2.  The aqueous binder composition according to claim 1, wherein the latex processing aid is present in the binder composition in amounts of from 10 to 30 weight percent based on the dry weight.

3.  The aqueous binder composition according to claim 1, wherein the binder has a solids content of from 5 to 30 wt. percent.

4.  The aqueous binder composition according to claim 3, wherein the aqueous binder composition has a viscosity in the range of from 5 to 30 mPas (cps).

5.  The aqueous binder composition according to claim 1, wherein the latex processing aid includes a polymer selected from the group consisting of vinyl acetate polymers, acrylic polymers, vinyl ester/ethylene copolymers, vinyl ester/ acrylic copolymers, styrene/butadiene copolymers and combinations thereof.

6.  The aqueous binder composition according to claim 1, wherein the latex processing aid includes from 0.3 to 5 parts per hundred weight monomer (pphm) of self-crosslinking monomer units.

7.  The aqueous binder composition according to claim 1, wherein the latex processing aid is surfactant-stabilized.

8.  The aqueous binder composition according to claim 1, wherein the latex processing aid has a glass transition temperature in the range of from -50°C to 10°C.

9.  The aqueous binder composition according to claim 1, wherein the latex processing aid includes a polymer selected from vinyl acetate/butyl acrylate copolymers and self-crosslinking vinyl acetate/ethylene copolymers.

10.  The aqueous binder composition according to claim 1, wherein the binder composition has a pH of from 6.0 to 8.0.

11.  A method for producing an aqueous salt-sensitive binder composition according to claim 1 comprising the steps of:

    (a) emulsion polymerizing a salt-sensitive copolymer resin in an aqueous medium in the presence of an emulsifying agent, where the salt-sensitive copolymer resin includes a carboxylic acid monomer and an ethylenically unsaturated comonomer;
    (b) solubilizing the salt-sensitive copolymer resin in the aqueous medium by neutralizing it with base at least until it becomes optically translucent in the aqueous medium; and
    (c) combining the solubilized copolymer resin with a latex processing aid.

**12.** A nonwoven fabric comprising:

(a) a web of fibers; and
(b) a salt-sensitive binder composition according to any one of claims 1 to 10 applied to the fibers, wherein said binder composition includes:

(i) a water soluble salt-sensitive polymer which includes from 5 to 80 wt. percent of a carboxylic acid monomer, and from 10 to 95 wt. percent of ethylenically unsaturated comonomer units; and
(ii) a vinyl acetate/acrylic latex processing aid which includes from 0.3 to 5 parts per hundred weight monomer (pphm) of self-crosslinking monomer units.

**13.** The nonwoven fabric according to claim 12, wherein the vinyl acetate/acrylic latex include from 1 to 3 parts per hundred weight monomer (pphm) of self-crosslinking monomer units.

**14.** The nonwoven fabric according to claim 12, wherein the self-crosslinking units include N-methylol acrylamide.

**Patentansprüche**

**1.** Wässrige, salzempfindliche Bindemittelzusammensetzung, umfassend:

(a) Wasser,
(b) ein wassersolubilisiertes salzempfindliches Polymer aus einem Emulsionspolymer durch Neutralisation mit Base, wobei das wassersolubilisierte salzempfindliche Polymer bezogen auf das Trockengewicht der Bindemittelzusammensetzung in Mengen von 60 bis 95 Gewichtsprozent enthalten ist, und
(c) ein Latexhilfsmittel, wobei das Latexhilfsmittel je hundert Gewichtsteile Monomer 0,25 bis 5 Teile selbstvernetzendes Monomer einpolymerisiert enthält und bezogen auf das Trockengewicht der Bindemittelzusammensetzung in Mengen von 5 bis 40 Gewichtsprozent enthalten ist.

**2.** Wässrige Bindemittelzusammensetzung nach Anspruch 1, bei der das Latexhilfsmittel bezogen auf das Trockengewicht in Mengen von 10 bis 30 Gewichtsprozent in der Bindemittelzusammensetzung enthalten ist.

**3.** Wässrige Bindemittelzusammensetzung nach Anspruch 1, bei der das Bindemittel über einen Feststoffgehalt von 5 bis 30 Gewichtsprozent verfügt.

**4.** Wässrige Bindemittelzusammensetzung nach Anspruch 3, bei der die wässrige Bindemittelzusammensetzung über eine Viskosität im Bereich von 5 bis 30 mPas (cps) verfügt.

**5.** Wässrige Bindemittelzusammensetzung nach Anspruch 1, bei der das Latexhilfsmittel ein Polymer ausgewählt aus der Gruppe bestehend aus Vinylacetatpolymeren, Acrylpolymeren, Vinylester/Ethylen-Copolymeren, Vinylester/Acryl-Copolymeren, Styrol/Butadien-Copolymeren und deren Kombinationen enthält.

**6.** Wässrige Bindemittelzusammensetzung nach Anspruch 1, bei der das Latexhilfsmittel je hundert Gewichtsteile Monomer 0,3 bis 5 Teile selbstvernetzendes Monomer einpolymerisiert enthält.

**7.** Wässrige Bindemittelzusammensetzung nach Anspruch 1, bei der das Latexhilfsmittel mit Tensid stabilisiert ist.

**8.** Wässrige Bindemittelzusammensetzung nach Anspruch 1, bei der das Latexhilfsmittel über eine Glasübergangstemperatur im Bereich von -50°C bis 10°C verfügt.

**9.** Wässrige Bindemittelzusammensetzung nach Anspruch 1, bei der das Latexhilfsmittel ein Polymer ausgewählt aus Vinylacetat/Butylacrylat-Copolymeren und selbstvernetzenden Vinylacetat/Ethylen-Copolymeren enthält.

**10.** Wässrige Bindemittelzusammensetzung nach Anspruch 1, bei der die Bindemittelzusammensetzung über einen pH-Wert von 6,0 bis 8,0 verfügt.

**11.** Verfahren zur Herstellung einer wässrigen salzempfindlichen Bindemittelzusammensetzung gemäß Anspruch 1, bei dem man

(a) ein salzempfindliches Copolymerharz in einem wässrigen Medium in Gegenwart eines Emulgiermittels durch Emulsionspolymerisation herstellt, wobei das salzempfindliche Copolymerharz eine Carbonsäure und ein ethylenisch ungesättigtes Comonomer einpolymerisiert enthält,

(b) das salzempfindliche Copolymerharz in dem wässrigen Medium durch Neutralisation mit Base zumindest so solubilisiert, bis es im wässrigen Medium optisch durchscheinend wird, und

(c) das solubilisierte Copolymerharz mit einem Latexhilfsmittel zusammenbringt.

12. Vliesstoff, umfassend:

(a) ein Faservlies und

(b) eine auf den Fasern aufgetragene salzempfindliche Bindemittelzusammensetzung gemäß einem der Ansprüche 1 bis 10, wobei die Bindemittelzusammensetzung

(i) ein wasserlösliches salzempfindliches Polymer, das 5 bis 80 Gewichtsprozent einer Carbonsäure und 10 bis 95 Gewichtsprozent ethylenisch ungesättigtes Comonomer einpolymerisiert enthält, und

(ii) ein Vinylacetat/Acryl-Latexhilfsmittel, das je hundert Gewichtsteile Monomer 0,3 bis 5 Teile selbstvernetzendes Monomer einpolymerisiert enthält, enthält.

13. Vliesstoff nach Anspruch 12, bei dem der Vinylacetat/Acryl-Latex je hundert Teile Monomer 1 bis 3 Gewichtsteile selbstvernetzendes Monomer einpolymerisiert enthält.

14. Vliesstoff nach Anspruch 12, bei dem die selbstvernetzenden Monomere N-Methylolacrylamid umfassen.

**Revendications**

1. Une composition aqueuse de liant sensible aux sels comprenant:

(a) de l'eau;

(b) un polymère solubilisé dans de l'eau, sensible aux sels et, qui est converti par neutralisation d'un polymère en émulsion par une base, dans lequel le polymère solubilisé dans de l'eau sensible aux sels est présent dans des proportions comprises entre 60 et 95 % en poids exprimés par rapport au poids sec de ladite composition de liant; et

(c) un adjuvant de fabrication à base de latex, lequel adjuvant de fabrication à base de latex inclut de 0,25 à 5 parties d'unités de monomère auto-réticulant pour 100 parties pondérales de monomère (ppcm), et est présent en proportions comprises entre 5 et 40 % en poids exprimés par rapport au poids sec de ladite composition de liant.

2. La composition aqueuse de liant selon la revendication 1, dans laquelle l'adjuvant de fabrication à base de latex est présent dans la composition de liant dans des proportions comprises entre 10 et 30 % en poids par rapport au poids sec.

3. La composition aqueuse de liant selon la revendication 1, dans laquelle le liant présente une teneur en solides comprise entre 5 et 30 % en poids.

4. La composition de liant aqueuse selon la revendication 3, dans laquelle la composition de liant aqueuse présente une viscosité comprise entre 5 et 30 mPas (cps).

5. La composition aqueuse de liant selon la revendication 1, dans laquelle l'adjuvant de fabrication à base de latex inclut un polymère choisi dans le groupe comprenant les polymères à base d'acétate vinylique, les polymères acryliques, les copolymères ester vinylique/éthylène, les copolymères ester vinylique/acrylique, les copolymères styrène/butadiène et leurs combinaison.

6. La composition aqueuse de liant selon la revendication 1, dans laquelle l'adjuvant de fabrication à base de latex inclut de 0,3 à 5 parties d'unités de monomère auto-réticulant pour 100 parties pondérales de monomère (pphm).

7. La composition aqueuse de liant selon la revendication 1, dans laquelle l'adjuvant de fabrication à base de latex est stabilisé par des agents tensioactifs.

**8.** La composition aqueuse de liant selon la revendication 1, dans laquelle l'adjuvant de fabrication à base de latex présente une température de transition vitreuse de l'ordre de -50°C to 10°C.

**9.** La composition aqueuse de liant selon la revendication 1, dans laquelle l'adjuvant de fabrication à base de latex inclut un polymère choisi parmi les copolymères acétate de vinyle/ acrylate de butyle et les copolymères auto-réticulants acétate de vinyle/éthylène.

**10.** La composition aqueuse de liant selon la revendication 1, dans laquelle la composition de liant présente un pH compris entre 6,0 et 8,0.

**11.** Un procédé de fabrication d'une composition aqueuse de liant, sensible aux sels selon la revendication 1, comprenant les étapes

(a) de polymérisation en émulsion d'une résine d'un copolymère sensible aux sels dans un milieu aqueux en présence d'un agent émulsifiant, la résine de copolymère sensible aux sels incluant un monomère d'acide carboxylique et un co-monomère à insaturation éthylénique;
(b) de solubilisation de la résine de copolymère sensible aux sels dans le milieu aqueux par neutralisation par une base au moins jusqu'à ce que la résine devienne optiquement translucide dans le milieu aqueux; et
(c) de combinaison de la résine de copolymère solubilisée avec un adjuvant de fabrication à base de latex.

**12.** Un tissu non tissé comprenant:

(a) une toile de fibres; et
(b) une composition de liant sensible aux sels selon une quelconque des revendications 1 à 10, appliquée aux fibres, dans laquelle ladite composition de liant inclut:

(i) un polymère sensible aux sels et soluble dans l'eau qui inclut de 5 à 80% en poids d'un monomère d'acide carboxylique, et de 10 à 95 % en poids d'unités d'un co-monomère à insaturation éthylénique; et
(ii) un adjuvant de fabrication à base d'un latex acétate de vinyle/acrylique incluant de 0,3 à 5 parties d'unités de monomère auto-réticulant pour 100 parties pondérales de monomère (ppcm).

**13.** Le tissu non tissé selon la revendication 12, dans laquelle le latex acétate de vinyle/acrylique inclut de 1 à 3 parties d'unités de monomère auto-réticulant pour 100 paries pondérales de monomère (ppcm).

**14.** Le tissu non tissé selon la revendication 12, dans laquelle les unités de monomère auto-réticulant incluent du N-méthylol acrylamide.

**EP 1 964 887 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5972805 A, Pomplun
- US 6897168 B, Branham
- US 6433245 B, Bjorkquist
- US 20030220042 A, Lostocco
- US 7320831 B
- WO 2006118746 A
- US 7329705 B
- WO 2006118745 A
- US 6602955 B, Soerens
- US 6653406 B, Soerens
- US 6908966 B, Chang
- US 6599848 B, Chen
- WO 0183866 A
- US 6835678 B, Jackson
- US 6548592 B, Lang
- US 6579570 B, Lang
- US 6713414 B, Pomplun
- US 6960371 B, Bunyard
- US 6043317 A
- US 6291372 B, Mumick
- US 20070173594 A1
- US 20090123773 A1
- US 20090036574 A
- US 7056847 B